# NOUVEAU FASCICULE DE BREVET EUROPEEN

(11) **EP 3 004 501 B2**
(45) Date de publication et mention de la décision concernant l'opposition: **24.12.2025**
(45) Mention de la délivrance du brevet: 13.07.2022
(21) Numéro de dépôt: 14724729.0
(22) Date de dépôt: 15.05.2014
(51) Int. Cl.: E05D 15/10

(54) **VITRAGE COULISSANT**
SCHIEBEFENSTER
SLIDING WINDOW

(30) Priorité: 28.05.2013 BE 201300372
(43) Date de publication de la demande: 13.04.2016
(73) Titulaire: AGC Glass Europe, 1348 Louvain-La-Neuve (BE)
(72) Inventeur: HICK, Robert, 4032 Chênée (BE)
(74) Mandataire: AGC Glass Europe
(86) Numéro de dépôt international: PCT/EP2014/059958
(87) Numéro de publication internationale: WO 2014/191215

(56) Documents cités:
- EP-A1- 0 972 663
- EP-A1- 1 659 247
- EP-A1- 1 659 247
- EP-A1- 1 719 651
- EP-A1- 1 916 132
- EP-A1- 1 920 957
- EP-A1- 1 921 234
- EP-A2- 1 700 979
- KR-B1- 100 764 718

## Description

L'invention concerne un dispositif d'ouverture et de fermeture pour les vitrages automobiles dont l'ouverture est obtenue dans un mouvement de coulissement. Plus précisément l'invention se rapporte à ces vitrages qui, lorsqu'ils sont fermés se placent dans une ouverture dans un ensemble fixe, ouverture qui peut être ménagée dans un panneau fixe, panneau qui est le plus souvent constitué lui-même par un vitrage.

Des vitrages de ce type sont proposés dans la littérature antérieure qui présentent différentes configurations. Les plus recherchés offrent des caractéristiques bien identifiées. Parmi celles-ci il est préféré que le vitrage mobile s'insère dans le panneau fixe de sorte qu'à l'extérieur il soit dans le même plan que le panneau fixe, configuration qualifiée de «flush». Cette disposition est préférée pour des raisons esthétiques et d'aérodynamisme. Une autre caractéristique requise par les utilisateurs est que le déplacement du vitrage, de sa position fermée à sa position ouverte et inversement, soit obtenu de manière commode, le dispositif assurant ce coulissement étant aussi ergonomique que possible. Il est aussi requis que les vitrages proposés ne soient ouvrables que de l'intérieur du véhicule pour éviter toute effraction.

En pratique tous les vitrages en question comportent des éléments communs. En particulier les vitrages mobiles sont articulés sur des rails fixés au panneau dans lesquels sont ménagés les ouvertures qu'ils viennent refermer. Des moyens mécaniques assurent la liaison entre le vitrage mobile et les rails et conduisent le vitrage mobile par translation de la position fermée dans le plan du panneau fixe à une position ouverte dans laquelle le vitrage mobile est dans un plan parallèle à celui du panneau fixe.

Les moyens mécaniques mis en œuvre antérieurement soit ne répondent pas entièrement aux demandes des utilisateurs, soit le font au prix d'une complexification des moyens ou de conditions d'utilisation plus ou moins commodes.

Parmi les modes de réalisation antérieurs une difficulté particulière est apparue qui est de concevoir un mécanisme d'actionnement du vitrage mobile qui non seulement assure le mouvement décrit précédemment de manière commode mais encore qui assure un verrouillage efficace du vitrage mobile en position fermée, le tout étant réalisé en un seul mouvement commodément exécutable par les passagers du véhicule. Un but de l'invention est donc de proposer un dispositif dont le fonctionnement et la constitution soient simplifiés tout en répondant aux nécessités exposées précédemment.

L'objet de l'invention est tel que précisé à la revendication 1.

Une particularité de l'invention est de rapporter l'ensemble des mouvements nécessaire à la mise en œuvre du vitrage mobile à l'actionnement de la poignée portée par le cadre du vitrage mobile. Selon l'invention, le mécanisme lui-même de la poignée associée à ce vitrage opère en plusieurs temps correspondant à une action comportant la mise en œuvre de mécanismes successifs tous inclus dans la poignée. Ce mécanisme dissocie le blocage/déblocage du vitrage mobile de son déplacement hors de l'ouverture dans le panneau fixe et de son coulissement antérieur.

De façon plus précise le mécanisme de la poignée, lorsque celle-ci est actionnée, agit en premier pour libérer un ensemble de moyens qui permettent le dégagement du vitrage mobile de sa position fermée. La même poignée entraîne ensuite le dégagement en question lorsque son action est prolongée.

Le mouvement du vitrage mobile de sa position fermée à sa position ouverte est assuré par un ensemble de guidage comportant d'une part des articulations en forme d'excentriques mobiles en rotation, solidaires du vitrage mobile, lesquels sont engagés dans des chemins ménagés dans des rails fixés au panneau fixe. Les rails sont situés de part et d'autre du vitrage mobile respectivement l'un à la partie supérieure l'autre à la partie inférieure. Un tel dispositif est présenté notamment dans la publication EP 1 945 473. Cette publication décrit par ailleurs des moyens permettant de verrouiller le vitrage dans la position fermée mais ces moyens sont indépendants de ceux assurant le coulissement du vitrage. Le mouvement de la poignée doit être complété par un mouvement imposé supplémentaire depuis celle-ci pour assurer le déplacement du vitrage. La mise en mouvement est donc plus complexe que celle proposée selon l'invention.

Le brevet EP 1 719 651 présente une solution analogue à celle du document précédent en ce qui concerne les mouvements du vitrage mobile. L'ensemble, au prix d'une certaine complexité, est tel qu'il permet une déplacement du vitrage mobile qui maintien ce dernier à tout moment dans un plan parallèle à celui du panneau fixe.

Les dispositifs selon l'invention se distinguent des précédents en ce qu'ils proposent une commande unique du vitrage, commande qui réalise le blocage/déblocage du vitrage mobile dans sa position fermée, mais aussi le coulissement du vitrage. A ce fonctionnement l'invention ajoute la possibilité de maintenir le vitrage mobile en position d'ouverture partielle soit en l'immobilisant complètement dans des positions préalablement aménagées soit dans une position quelconque mais cette position n'étant assurée que de manière relative reposant sur la friction de certains éléments du dispositif.

Le mécanisme de la poignée de commande est associé à un ensemble qui transmet le mouvement et convertit le mouvement de celle-ci et assure le déplacement du vitrage mobile aussi bien dans son dégagement depuis sa position fermée que dans sa translation. De manière préférée la transmission est obtenue au moyen d'une tringle disposée le long du bord du vitrage, tringle qui comporte à ses extrémités des éléments destinés à coopérer avec des rails solidaires du panneau fixe pour guider le vitrage dans son déplacement, tringle encore dont le mouvement en rotation est commandé par le mécanisme de la poignée. Dans ce mode selon l'invention, la poignée est également le moyen qui permet le blocage/déblocage de la rotation de la tringle, et par suite, le moyen qui verrouille le vitrage mobile en position fermée.

Pour entrainer la rotation de la tringle, la poignée effectue avantageusement une translation qui est convertie en un mouvement de rotation de la tringle au moyen d'une crémaillère animée par la poignée et d'un pignon porté par la tringle, la crémaillère engrenant sur le pignon. Indépendamment du mouvement de rotation indiqué, la tringle en l'absence d'actionnement de la poignée et en position fermée du vitrage, est bloquée par le mécanisme de la poignée. Le déblocage de la rotation de la tringle n'intervient qu'après que la poignée utilisée n'ait dépassé un seuil de mise en œuvre. Cette construction garantit une fermeture du vitrage mobile qui écarte toute possibilité d'infraction, le déblocage ne pouvant s'effectuer qu'à partir de la poignée disposée à l'intérieur du véhicule.

De manière avantageuse, par mesure de simplicité la rotation de la tringle en position fermée est empêchée parc un élément porté par la partie mobile de la poignée, élément qui coopère avec une pièce solidaire de la tringle pièce dont la forme n'est pas de révolution selon l'axe de la tringle. Les moyens correspondant peuvent prendre des formes diverses dont certains sont détaillés à propos des exemples de mise en œuvre décrits plus loin.

Selon l'invention l'actionnement de la poignée correspond à une translation dans un plan sensiblement parallèle au vitrage. Ceci permet d'éviter que la poignée s'avance vers l'intérieur dans l'habitacle. Le mouvement surtout permet à l'utilisateur de prendre appui simultanément sur la poignée et sur les cadre de la vitre mobile assurant dans un seul mouvement de préhension. Pour rendre le mouvement de la poignée aussi commode et ergonomique que possible, celui-ci est pour toute manœuvre une translation dans un seul sens correspondant à la contraction de la main de l'utilisateur. Le retour à la position de «repos» de la poignée après relâchement de celle-ci, est assuré par des moyens de rappel, avantageusement des ressorts qui agissent en repoussant la poignée vers sa position initiale. D'autres moyens de rappel agissent sur la rotation de la tringle.

Toujours dans la mise en œuvre d'un ensemble comportant la tringle en rotation, les extrémités de celle-ci, qui coopèrent avec les rails de coulissement comportent des éléments mobiles à la fois en rotation et en translation dans les rails de coulissement. Ces moyens sont avantageusement décentrés par rapport à l'axe de la tringle de sorte que la rotation de la tringle entraîne simultanément un déplacement de celle-ci par rapport aux rails et écarte le vitrage mobile de sa position fermée. Le mouvement correspondant et la rotation doivent être limités à celui conduisant à cette position écartant le vitrage de sa position fermée. Pour limiter ce mouvement, la tringle est pourvue d'un élément assurant la limitation de la rotation en coopération par exemple avec un élément formant butée solidaire du cadre dans lequel se situe le mécanisme de la poignée. Avantageusement cet élément est combiné sur la tringle avec celui permettant le blocage en rotation dans le premier temps d'actionnement de la poignée. Ceci prend par exemple la forme d'une sorte de came dont le profil permet la mise en œuvre de ces deux fonctions.

Hors le mouvement correspondant au désengagement du vitrage mobile de sa position fermée, pendant la translation, la tringle est maintenue dans les rails dans la position qui tient le vitrage hors du plan du panneau fixe. Ceci s'oppose à la rotation inverse de rappel de la tringle et, simultanément, lorsque la poignée est relâchée, freine le mouvement du vitrage par friction sur les rails des moyens situés aux extrémités de la tringle.

Le cas échéant les rails comportent des logements dans lesquels les extrémités peuvent par rotation inverse se décaler par rapport aux chemins de coulissement et bloquer le vitrage dans des positions ouvertes préétablies.

Le dispositif selon l'invention peut encore comprendre des moyens de condamnation de l'ouverture du vitrage indépendants des moyens de fermeture précédemment décrits. Il s'agit par exemple de moyens de sécurité pour éviter les manipulations par des enfants présents dans le véhicule. Ces moyens sont avantageusement des moyens additionnels qui bloquent la rotation de la tringle.

Dans la suite l'invention est décrite de façon détaillée, pour des modes de réalisation particuliers, en faisant référence aux figures annexées dans lesquelles :
- la figure 1 est une représentation en perspective d'un vitrage coulissant
selon l'invention ;
- la figure 2 est analogue à la figure 1, le capot cachant le mécanisme
d'actionnement étant enlevé ;
- la figure 3 montre un détail agrandi de la poignée de la figure 2 ;
- la figure 4a montre en coupe horizontal selon A-A de la figure 3, le détail
du mécanisme de la poignée ;
- la figure 4b, analogue à la précédente, montre une coupe horizontale sous
le pignon du mécanisme de la poignée, au niveau du système de blocage de la tringle par la poignée ;
- les figure 5a et 5b sont analogues aux précédentes, et illustrent le
mécanisme de la poignée dans la position libérant la rotation du mécanisme ;
- les figures 6a et 6b montrent la position du mécanisme la poignée étant
entièrement actionnée ;
- les figures 7a, 7b, 7c illustrent la position des moyens situés dans les rails
support en position de verrouillage du vitrage, les figures 7b et 7c étant en coupe ;
- les figures 8a, 8b, 8c sont analogues aux figures 7, illustrent les positions
après déverrouillage ;
- la figure 9 analogue à la figure 2 présente le vitrage en position partiellement coulissé ;
- les figures 10a, 10b, 10c, sont analogues aux figures 7 et 8, pour le
vitrage en position présenté à la figure 9 ;
- la figure 11 analogue à la figure 2 montre la partie mobile 3 du vitrage
déplacé dans une autre position;
- les figures 12a, 12b, 12c, sont analogues aux figures 7, 8 et 10 pour le
vitrage en position présenté à la figure 11.

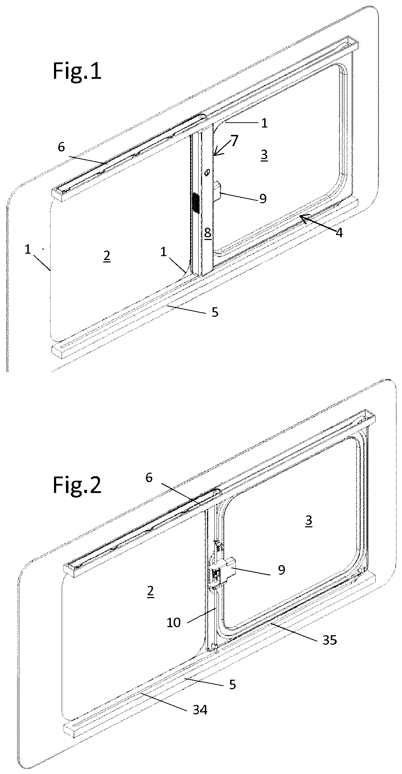

La figure 1 illustre de manière schématique la composition d'ensemble du vitrage mobile selon l'invention monté sur un panneau fixe 2 constitué d'un vitrage de plus grande dimension. Le vitrage 2 est ordinairement fixé sur la carrosserie du véhicule, par collage. Pour masquer les zones de collage il est usuel de revêtir les bords du vitrage d'une bande émaillée non transparente, dont la limite est indiquée en 1.

Le vitrage fixe 2, comporte une ouverture dans laquelle s'insère le vitrage mobile 3. Les dimensions de ce dernier correspondent à celles de l'ouverture en laissant le minimum d'intervalle nécessaire pour permettre les mouvements décrits plus loin. Le vitrage mobile en position fermée, s'aligne dans le plan du vitrage fixe 2 de façon «flush».

Le vitrage mobile 3 est dans un cadre 4 qui l'entoure à sa périphérie. Pour assurer la disposition «flush», le cadre 4 se situe entièrement du côté du vitrage 3 tourné vers l'habitacle. Le cadre est avantageusement collé sur cette face du vitrage 3, et dissimulé à la vue de l'extérieur également par l'émail de masquage.

Deux rails 5 et 6 sont aussi collés sur le vitrage fixe 2. Ils sont aussi avantageusement collés dans les zones revêtues d'émail de masquage.

Le cadre 4 est monté mobile sur les rails 5, 6 qui s'étendent longitudinalement. Le mouvement du vitrage mobile étant de préférence une translation horizontale, les rails sont eux-mêmes disposés de manière sensiblement horizontale.

A la figure 1 le rail 6 est présenté découvert à sa partie supérieure donnant un aperçu des moyens de guidage détaillés plus loin.

Le cadre 4 comporte sur son bord vertical 7, un ensemble de commande d'ouverture et verrouillage dissimulé sous un capot 8. Cet ensemble est actionné à partir d'une poignée 9 disposée de telle sorte qu'un seul mouvement suffise à verrouiller ou déverrouiller le cadre 4 du vitrage mobile 3, et assurer son coulissement dans les rails 5 et 6.

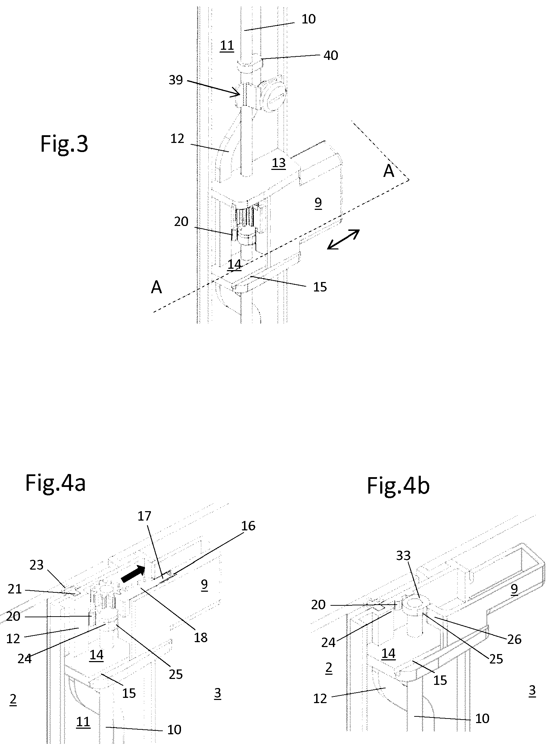

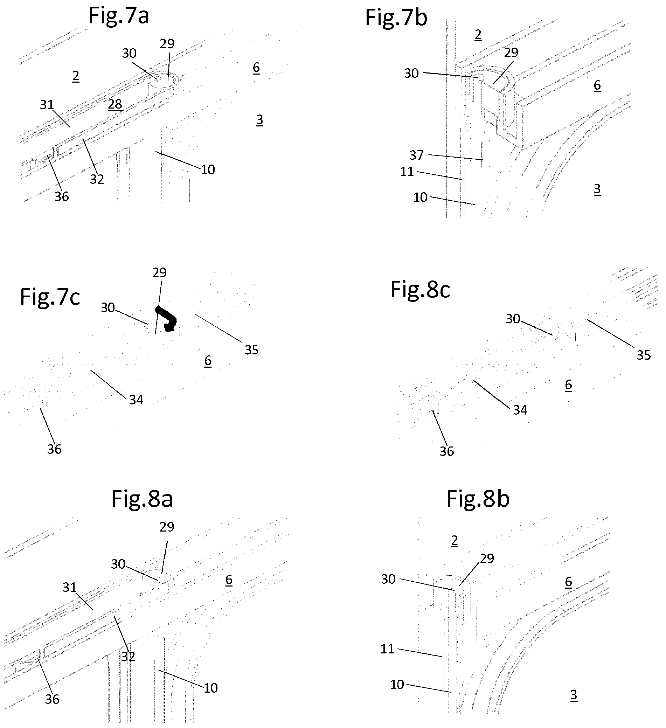

La figure 2 présente le même vitrage qu'à la figure 1, le capot 8 cachant le mécanisme étant ôté, fait apparaître une tringle 10 sur laquelle s'articule le mécanisme entrainé par la poignée 9, mécanisme dont la structure et le fonctionnement sont détaillés aux figures 3 à 6. La tringle 10 se prolonge jusqu'aux rails 5 et 6, et porte à ses deux extrémités des éléments qui assurent guidage et verrouillage, qui seront détaillés aux figures 7, 8, 10 et 12.

La figure 3 reprend en partie la figure 2 au niveau du mécanisme de commande. Ce mécanisme est fixé sur le fond du cadre 11 sur lequel est fixé le vitrage mobile 3. Le fond du cadre 11 comporte une partie saillante 12 s'étendant sur toute la hauteur du bord vertical 7. A cette partie saillante 12, correspond du côté tourné vers la partie du vitrage fixe 2, une rainure 21 qui reçoit un joint souple d'étanchéité 23 reposant sur le vitrage 2. L'incurvation de la partie saillante 12 au niveau du mécanisme de la poignée, peut faciliter la mise en place des différents éléments du mécanisme. Cette forme n'est pas impérative et une forme rectiligne est également avantageuse.

Deux platines 13 et 14 fixées au fond 11 du cadre 4 et sur la partie saillante 12 maintiennent la tringle 10, en la laissant libre en rotation.

La poignée 9 est mobile en translation dans une direction sensiblement parallèle au plan du vitrage. Le guidage de la poignée dans cette translation est réalisé, dans le mode représenté, par glissement des parois constituant le corps de cette poignée dans deux rainures 15 ménagées dans les platines dont seule est visible sur la figure celle de la platine inférieure 14.

La figure 4a montre le dispositif de la poignée en coupe selon le plan A-A de la figure 3, plan situé sous la platine 13. Sur cette figure la poignée est en position de repos. La partie qui se prolonge à l'extérieur du cadre 4, est repoussée dans le sens de la flèche par un ressort 16 qui entoure la tige 17 qui fait corps avec une crémaillère 18.

La crémaillère 18 engrène un pignon 19 solidaire de la tringle 10. La tringle 10 porte aussi une bague 24 de forme complexe. La bague comporte un pan coupé vertical constituant un méplat 25. La bague 24 forme une came excentrée par rapport à l'axe de la tringle10. La partie 33 la plus éloignée de l'axe, visible sur la figure 4b, est telle qu'elle s'oppose à la rotation de la tringle au-delà d'un angle d'environ 180°, en étant retenue par la butée 20 disposée sur le fond 11.

La figure 4b est une coupe horizontale comme précédemment, située sous le pignon 19. La position est celle correspondant à la poignée repoussée en position de repos. Dans cette position un retour 26 de la paroi de la poignée est en regard du méplat 25 de la bague 24 et au contact de celle-ci avec un minimum de jeu de sorte que la tige 10 est immobilisée.

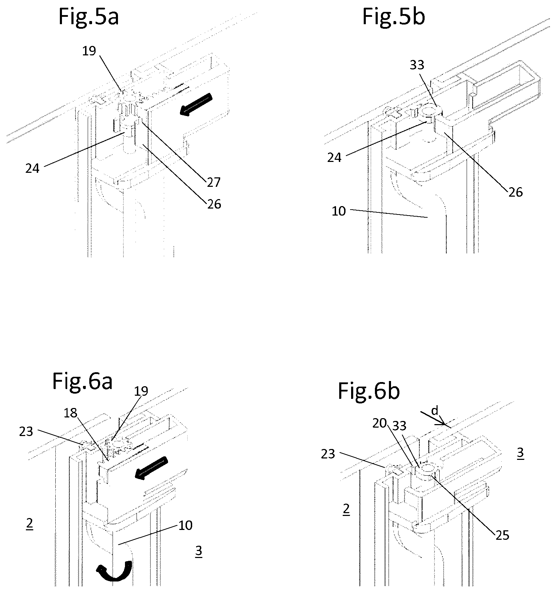

La figure 5a et la figure 5b montrent le début du mouvement de translation de la poignée conduisant à la compression du ressort de renvoi 16. Ce premier temps s'achève lorsque la tige 17 de la crémaillère 18 vient en butée à l'extrémité de la glissière 27 dans laquelle la crémaillère est logée. Dans ce premier temps la crémaillère 18 reste immobile, bloquée par le retour 26 et le méplat 25 de la bague 24. La progression ultérieure de la poignée libère la rotation de la tringle 10.

Les figures 6a et 6b représentent la poignée dans sa position ultime. La tringle 10, libérée dans sa rotation, est entrainée par la crémaillère 18 et le pignon 19.

Comme indiqué ci-dessus, la rotation de la tringle 10 entraine celle des moyens coopérant avec les rails pour assurer le verrouillage puis le déverrouillage décrits plus loin.

Dans la position des figures 6 l'ensemble du vitrage mobile 3 et du montant 7 du cadre 4 comportant le mécanisme, est déplacé dans un sens écartant du plan du panneau fixe 2, d'une distance d supérieure à l'épaisseur du panneau fixe 2. Le vitrage mobile 3 est prêt pour un coulissement l'amenant en vis-à-vis de la partie 2.

Au mouvement de la poignée indiqué ci-dessus, s'opposent des moyens de rappel non représentés. Ces moyens de rappel agissent sur la tringle 10 pour entraîner une rotation contraire à celle obtenue par actionnement de la poignée 9. Dès le relâchement de la pression sur cette dernière la tringle 10 tend à cette rotation en retour. Les mécanismes dont il est question ci-après font que ce retour en position peut être incomplet du fait de la position particulière des moyens situés aux extrémités de la tringle dans les rails de coulissement.

La figure 7a montre le rail 6 découvert à sa partie supérieure pour mieux présenter les composants et leur position respective, et la partie 7 du cadre 4 limitée à celle constituant le fond 11, fond qui est fixé au vitrage mobile.

A l'extrémité 30 de la tringle 10, un galet 29 est solidarisé avec la tringle dans ses mouvements de rotation. Dans la forme présentée ce galet est globalement cylindrique mais pourrait être différent pour autant qu'il assure les mêmes fonctions qui sont détaillées ci-après.

Le galet peut coulisser dans un chemin 28 délimité par des parois 31, 32 constituées dans le rail 6. Dans le mode présenté les parois sont réunies à leur extrémité par une paroi en arc de cercle.

L'extrémité 30 de la tringle 10 est décentrée par rapport à l'axe du galet de sorte que la rotation de la tringle 10 sous l'action de la poignée 9, comme décrit précédemment, entraîne un déplacement de l'ensemble de la partie 3 du vitrage par rapport au plan initial représenté à cette figure 7a. Le déplacement d, est celui indiqué précédemment.

Dans le rail inférieur 6 on voit l'articulation de l'extrémité de la tringle 10 dans le rail. La tringle 10 est guidée dans le chemin 34 visible notamment à la figure 2. Dans la rotation la tringle 10 entrainant le cadre 4 et le vitrage mobile 3 fixé par collage au cadre, suit le chemin 34 ménagé dans le rail, chemin qui à l'origine est dirigé de manière à écarter ce vitrage de la position fermée «flush».

La figure 7b présente en coupe dans l'axe du galet 29, et perpendiculairement au plan du vitrage, la position des différents éléments. Apparait sur cette figure un élément de maintien 37 qui fixe la tringle 10 au fond 11 du cadre 4. Cet élément 37 laisse la tringle libre en rotation. En partie basse un support analogue complète la fixation de la tringle.

La figure 7c en coupe au niveau des moyens de guidage de la tringle 10, montre de la même façon les dispositions dans le rail inférieur. L'extrémité de la tringle est dans une partie du chemin 34 formant un coude avec sa partie principale s'étendant, comme le rail, parallèlement au plan du vitrage fixe 2.

La même représentation est reprise aux figures 8a, 8b et 8c. Ces figures illustrent les positions, de la tringle 10 après rotation sous l'action de la poignée comme indiqué précédemment. La rotation de la tringle est pratiquement d'un demi-tour par rapport à sa position initiale. Le fond 11 du cadre 4 s'est aussi écarté du panneau fixe 2 d'une distance supplémentaire d.

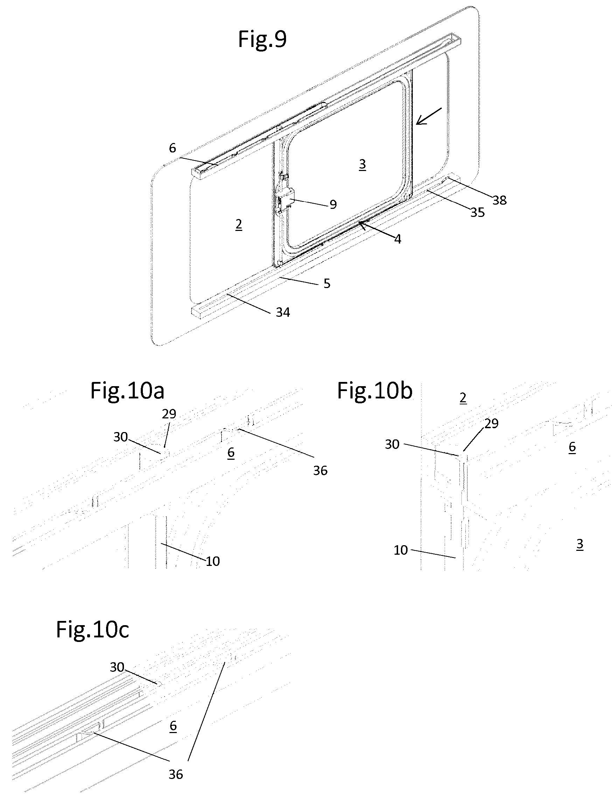

Les figures 9, et 10a, 10b et 10c sont analogues aux précédentes et illustrent la situation lorsque le coulissement du vitrage mobile 3 est engagé.

La figure 10a montre la position du galet supérieur 29 dans le chemin 28 du rail 5, chemin entièrement rectiligne comme on le voit aux figures 7a et 8a. Le galet 29 reste dans la position imposée lors de la rotation précédente de la tringle 10. Il est maintenu dans cette position en dépit des moyens de rappel en rotation inverse, par l'extrémité 30 de la tringle 10. Ceci est visible à la figure 10c pour la partie basse du vitrage, mais la même disposition se trouve aussi en position haute. Dans la partie basse l'extrémité de la tringle suit le chemin 34 parallèle à celui du galet dans le chemin 28.

Si l'actionnement de la poignée 9 est relâché, l'extrémité 30 de la tige est plaquée sur les parois du chemin 34 sous l'effet du rappel. Ce placage et le frottement qui en résultent, constituent un frein à un déplacement du vitrage qui ne serait pas sollicité.

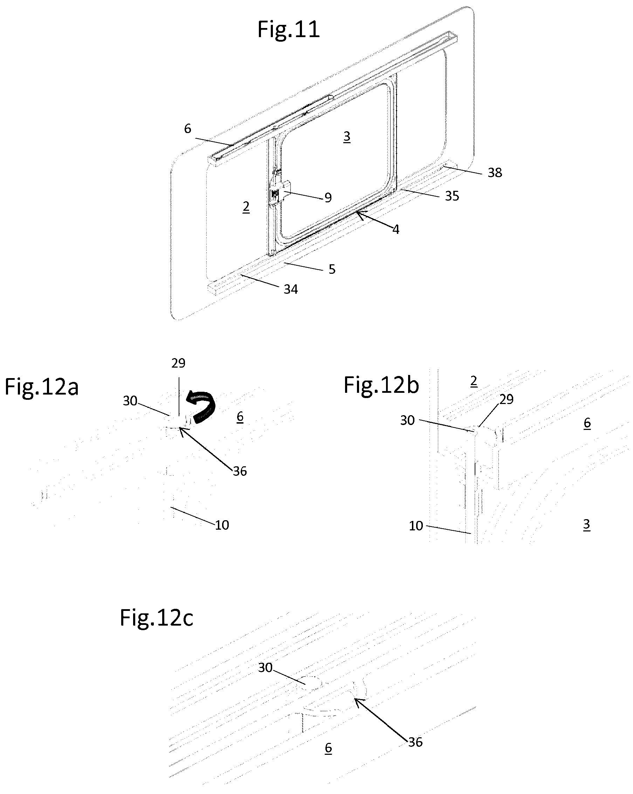

La figure 11 et les figures 12a, 12b et 12c montrent la disposition lorsque le vitrage mobile est dans une position ouverte, et bloqué dans cette position.

En figure 12a on voit le galet 29 qui sous l'effet des moyens de rappel a pivoté d'un demi-tour. Cette rotation est rendue possible par la présence du logement 36. Elle s'opère bien que l'extrémité 30 de la tige 10 soit maintenue dans le chemin qui lui est propre comme représenté en figure 12c. Le blocage dans cette position vient de ce que pour permettre un déplacement supplémentaire du vitrage mobile, une intervention est nécessaire au niveau de la poignée. Sans cette intervention la tringle est bloquée en rotation au niveau du mécanisme de la poignée alors que le dégagement du galet 29 hors du logement 36 nécessite une rotation de la tringle.

Les figures montrent des logements 36 distants les uns des autres, ce qui en limite le nombre sur le rail. Le fonctionnement de ces éléments montre qu'ils peuvent être très rapprochés si l'on souhaite multiplier les positions de blocage intermédiaires.

Dans ce qui précède seuls les éléments du dispositif fonctionnant avec la poignée ont été décrits. Ils se situent tous sur le même bord du vitrage du côté de celui-ci qui est celui disposé en avant dans le mouvement de dégagement depuis la position fermée. Le vitrage mobile est nécessairement maintenu du côté opposé. Le mécanisme peut être sensiblement plus simple de ce côté. Il peut suffire de disposer des chemins 35 dans les rails 5 et 6. Ces chemins coopèrent avec des éléments portés par le cadre 4. Il peut s'agir de simples pions dans la mesure où ils ne conditionnent aucun mouvement qui ne soit imposé par le chemin 35. Les chemins 35 sont essentiellement rectilignes et alignés avec les chemin 34 pour faire en sorte que le vitrage mobile, une fois extrait de sa position fermée, se déplace en restant sensiblement parallèle au vitrage fixe 2.

Pour assurer le dégagement du vitrage mobile de ce côté, comme visible sur les figures 9 et 11, l'extrémité 38 du chemin 35 présente une certaine inclinaison par rapport à la direction générale de ce chemin. Cette forme est destinée à imposer à ce bord du vitrage un louvoiement qui conduit le vitrage mobile 3 dans la position dégagée de l'ouverture dans un plan parallèle à celui du panneau fixe 2. Le louvoiement est suffisamment incliné pour ne pas freiner de manière excessive le mouvement du vitrage mobile.

Le bénéfice de l'ensemble présenté ci-dessus, qui rend passif le mouvement du bord ne comportant pas de mécanisme de poignée, est sa grande simplicité. Il est bien entendu possible de dupliquer les systèmes présentés pour l'autre bord du vitrage mobile, avec des renvois des mouvements assurés par des tringles associant les extrémités des deux bords du vitrage. Dans la mesure où le choix de mécanismes économiques prévaut, il est préférable de choisir le mode présenté ci-dessus.

Des éléments complémentaires peuvent encore être envisagés. En particulier comme représenté à la figure 3, il est possible de disposer d'une «sécurité enfant». Il s'agit ici d'un moyen qui permet de condamner l'action de la poignée par un blocage supplémentaire indépendant. Dans le mode présenté à cette figure 3 il s'agit simplement d'un élément 39 fixé au fond 11 du cadre, et dont la rotation vient bloquer un ergot 40 solidaire de la tringle 10. Pour que le système ne soit pas trop aisément manipulable, dans le mode présenté, sa rotation nécessite l'introduction dans la fente qu'il présente, par exemple de la tranche d'une pièce de monnaie.

## Revendications

1. Dispositif d'ouverture et de fermeture pour un vitrage coulissant (3) d'un véhicule automobile, ledit vitrage coulissant (3) étant mobile par rapport à un panneau fixe (2), d'une position fermée dans laquelle le vitrage mobile (3) est disposé de façon «flush» par rapport au panneau fixe (2), à une position ouverte dans laquelle le vitrage mobile (3) est déplacé parallèlement au panneau fixe,
Ledit dispositif comprenant :
un mécanisme de poignée (9) apte à être portée par le bord (7) d'un cadre (4) solidaire du vitrage mobile (3),
un ensemble commandé à partir du mécanisme de poignée (9) et où ledit ensemble transmet le mouvement et convertit le mouvement du mécanisme de la poignée (9) et assure le déplacement du vitrage mobile (3) aussi bien dans son dégagement depuis sa position fermée que dans sa translation, tel que partant de la position fermée l'actionnement du mécanisme de la poignée (9) dans un premier temps libère le verrouillage du vitrage mobile (3) puis, dans un deuxième temps, le conduit hors de sa position fermée, le bord du vitrage correspondant au bord (7) du cadre (4), étant déplacé par rapport au panneau fixe, vers la position permettant le coulissement du panneau mobile, et tel que l'actionnement du mécanisme de la poignée (9) correspondant à une translation dans un plan sensiblement parallèle au vitrage,
et où le cadre (4) est monté mobile sur des rails (5) et (6) qui s'étendent longitudinalement, le dit ensemble étant actionné par le mécanisme de poignée (9) disposée de telle sorte qu'un seul mouvement suffise à verrouiller ou déverrouiller le cadre (4) du vitrage mobile (3) et assurer le coulissement dans les rails (5) et (6), et dans lequel le vitrage mobile (3) dans sa position fermée est bloqué au niveau du mécanisme de poignée (9).

2. Dispositif selon la revendication 1 dans lequel le blocage/déblocage est réalisé au niveau de la rotation d'une tringle (10) s'étendant le long du bord (7) du cadre (4), tringle (10) comportant à ses extrémités des moyens coopérant avec des rails (5), (6) fixés au panneau (2), dans le coulissement du vitrage mobile.

3. Dispositif selon la revendication 2 dans lequel le mécanisme de la poignée (9) comprend un moyen (26) coopérant avec une bague (24) formant une came, disposée sur la tringle (10), interdisant la rotation de cette dernière, jusqu'à atteindre un seuil dans l'actionnement de la poignée (9).

4. Dispositif selon la revendication 3 dans lequel la poignée (9) est mobile en translation dans une direction sensiblement parallèle au plan de coulissement du vitrage mobile (3).

5. Dispositif selon la revendication 4 dans lequel le mécanisme de la poignée (9) comporte une crémaillère (18) engrenant un pignon (19) solidaire de la tringle (10).

6. Dispositif selon la revendication 5 dans lequel la crémaillère (18) n'est mise en mouvement qu'après dépassement du seuil libérant la rotation de la tringle (10).

7. Dispositif selon l'une des revendications 3 à 6 dans lequel la rotation de la bague (24) sous l'action de la poignée est limitée par une ou plusieurs butées (20) solidaires du cadre (4).

8. Dispositif selon la revendication 7 dans lequel la limitation de la rotation de la tringle (10) est telle qu'elle situe la position des extrémités (30) de la tringle (10), dans l'alignement de la partie rectiligne des chemins de coulissement (34) ménagés dans les rails (5, 6).

9. Dispositif selon l'une des revendications 1 à 8 comprenant des moyens de rappel solidaires de la tringle, tendant à une rotation de celle-ci, de sens opposé à celle obtenue par l'action de la poignée.

10. Dispositif selon la revendication 9 dans lequel les moyens de rappel sont constitués par un ou plusieurs ressorts hélicoïdaux entourant et coaxiaux à la tringle (10).

11. Dispositif selon la revendication 9 ou la revendication 10 dans lequel le mouvement de rotation inverse, imposé par les moyens de rappel lorsque que la poignée n'est plus actionnée, plaquent l'extrémité (30) de la tringle (10) sur les parois du chemin de coulissement (34) dans les rails (5, 6) freinant par friction le mouvement de coulissement lorsque le vitrage a été extrait de sa position de fermeture «flush».

12. Dispositif selon l'une des revendications 1 à 11, dans lequel outre l'extrémité de la tringle (10) coulissant dans le chemin (34), les moyens coopérant avec les rails (5, 6) dans le coulissement comprennent des galets (29) disposés de façon excentrés à l'extrémité (30) de la tringle (10,) ces galets dans les mouvements du vitrage restant dans des chemins rectilignes (28) disposés dans les rails (5, 6).

13. Dispositif selon la revendication 12 dans lequel les chemins de coulissement (28) des galets (29) comporte un ou plusieurs logements (36) sur les parois (32) de ce chemin (28), logements recevant le galet (29) sous l'effet de la rotation de rappel lorsque l'actionnement de la poignée cesse.

14. Vitrage coulissant (3) pour un véhicule automobile comprenant un dispositif selon l'une des revendications 1 à 13.

## Patentansprüche

1. Öffnungs- und Schließvorrichtung für ein Schiebefenster (3) eines Kraftfahrzeugs, wobei das Schiebefenster (3) in Bezug auf eine feststehende Platte (2) aus einer geschlossenen Position, in welcher die bewegliche Scheibe (3) "bündig" in Bezug auf die feststehende Platte (2) angeordnet ist, in eine offene Position, in welcher die bewegliche Scheibe (3) parallel zu der feststehenden Platte verschoben ist, beweglich ist,
wobei die Vorrichtung umfasst:
einen Griffmechanismus (9), der dafür ausgelegt ist, vom Rand (7) eines Rahmens (4) getragen zu werden, der mit der beweglichen Scheibe (3) fest verbunden ist,
eine Anordnung, die vom Griffmechanismus (9) aus gesteuert wird,
und wobei die Anordnung die Bewegung überträgt und die Bewegung des Mechanismus des Griffes (9) umwandelt und die Verlagerung der beweglichen Scheibe (3) sowohl bei ihrer Lösung aus ihrer geschlossenen Position als auch bei ihrer Translation sicherstellt, derart, dass, ausgehend von der geschlossenen Position, die Betätigung des Mechanismus des Griffes (9) in einer ersten Phase die Verriegelung der beweglichen Scheibe (3) löst und danach, in einer zweiten Phase, sie aus ihrer geschlossenen Position hinaus führt, wobei der dem Rand (7) des Rahmens (4) entsprechende Rand der Scheibe in Bezug auf die feststehende Platte in Richtung der Position verlagert wird, die das Gleiten der beweglichen Platte ermöglicht, und derart, dass die Betätigung des Mechanismus des Griffes (9) einer Translation in einer Ebene entspricht, die im Wesentlichen parallel zur Scheibe ist,
und wobei der Rahmen (4) beweglich auf Schienen (5) und (6) gelagert ist, welche sich längs erstrecken, wobei die Anordnung von dem Griffmechanismus (9) betätigt wird, der derart angeordnet ist, dass eine einzige Bewegung genügt, um den Rahmen (4) der beweglichen Scheibe (3) zu verriegeln oder zu entriegeln und das Gleiten in den Schienen (5) und (6) sicherzustellen, und wobei die bewegliche Scheibe (3) in ihrer geschlossenen Position am Griffmechanismus (9) arretiert ist.

2. Vorrichtung nach Anspruch 1, wobei das Arretieren/Lösen der Arretierung bei der Drehung einer Stange (10) durchgeführt wird, die sich entlang des Randes (7) des Rahmens (4) erstreckt, wobei die Stange (10) an ihren Enden Mittel aufweist, die beim Gleiten der beweglichen Scheibe mit an der Platte (2) befestigten Schienen (5), (6) zusammenwirken.

3. Vorrichtung nach Anspruch 2, wobei der Mechanismus des Griffes (9) ein Mittel (26) umfasst, das mit einem einen Nocken bildenden Ring (24) zusammenwirkt, der auf der Stange (10) angeordnet ist und die Drehung dieser Letzteren verhindert, bis bei der Betätigung des Griffes (9) ein Schwellenwert erreicht wird.

4. Vorrichtung nach Anspruch 3, wobei der Griff (9) in einer Richtung translatorisch beweglich ist, die im Wesentlichen parallel zur Ebene des Gleitens der beweglichen Scheibe (3) ist.

5. Vorrichtung nach Anspruch 4, wobei der Mechanismus des Griffes (9) eine Zahnstange (18) aufweist, die in ein Ritzel (19) eingreift, das mit der Stange (10) fest verbunden ist.

6. Vorrichtung nach Anspruch 5, wobei die Zahnstange (18) erst nach Überschreitung des Schwellenwertes, der die Drehung der Stange (10) freigibt, in Bewegung versetzt wird.

7. Vorrichtung nach einem der Ansprüche 3 bis 6, wobei die Drehung des Ringes (24) unter der Wirkung des Griffes durch einen oder mehrere Anschläge (20) begrenzt wird, die mit dem Rahmen (4) fest verbunden sind.

8. Vorrichtung nach Anspruch 7, wobei die Begrenzung der Drehung der Stange (10) derart erfolgt, dass bewirkt wird, dass die Position der Enden (30) der Stange (10) mit dem geradlinigen Teil der in den Schienen (5, 6) ausgebildeten Gleitwege (34) fluchtet.

9. Vorrichtung nach einem der Ansprüche 1 bis 8, welche Rückstellmittel umfasst, die mit der Stange fest verbunden sind und bestrebt sind, eine Drehung derselben in einer Richtung zu bewirken, die entgegengesetzt zu derjenigen ist, die durch die Betätigung des Griffes erhalten wird.

10. Vorrichtung nach Anspruch 9, wobei die Rückstellmittel aus einer oder mehreren Schraubenfedern bestehen, welche die Stange (10) umgeben und koaxial mit ihr sind.

11. Vorrichtung nach Anspruch 9 oder Anspruch 10, wobei die gegenläufige Drehbewegung, die durch die Rückstellmittel bewirkt wird, wenn der Griff nicht mehr betätigt wird, das Ende (30) der Stange (10) an die Wände des Gleitweges (34) in den Schienen (5, 6) andrückt und dabei die Gleitbewegung durch Reibung bremst, wenn die Scheibe aus ihrer "bündigen" Schließposition herausgezogen worden ist.

12. Vorrichtung nach einem der Ansprüche 1 bis 11, wobei außer dem Ende der Stange (10), das im Weg (34) gleitet, die Mittel, die mit den Schienen (5, 6) beim Gleiten zusammenwirken, Rollen (29) umfassen, die exzentrisch am Ende (30) der Stange (10) angeordnet sind, wobei diese Rollen bei den Bewegungen der Scheibe in geradlinigen Wegen (28) verbleiben, die in den Schienen (5, 6) angeordnet sind.

13. Vorrichtung nach Anspruch 12, wobei die Gleitwege (28) der Rollen (29) eine oder mehrere Aufnahmen (36) an den Wänden (32) dieses Weges (28) aufweisen, wobei diese Aufnahmen die Rolle (29) unter der Wirkung der Rückstelldrehung aufnehmen, wenn die Betätigung des Griffes endet.

14. Schiebefenster (3) für ein Kraftfahrzeug, welches eine Vorrichtung nach einem der Ansprüche 1 bis 13 umfasst.

## Claims

1. Device for opening and closing a sliding window (3) of a motor vehicle, said sliding window (3) being able to move with respect to a fixed panel (2), from a closed position, in which the movable window (3) is arranged "flush" with respect to the fixed panel (2), to an open position, in which the movable window (3) is moved parallel to the fixed panel, the device comprising:
a handle mechanism (9) that can be borne by the edge (7) of a frame (4) secured to the movable window (3), an assembly controlled by the handle mechanism (9) and where said assembly transmits the movement and converts the movement of the handle mechanism (9) and allows the movable window (3) to move both in its disengagement from its closed position and in its translation such that, starting from the closed position, actuation of the mechanism of the handle (9), in a first stage, unlocks the movable window (3) then, in a second stage, leads it out of its closed position, the edge of the window corresponding to the edge (7) of the frame (4), being moved with respect to the fixed panel, toward the position allowing the movable panel to slide, and such that the actuation of the handle mechanism (9) corresponds to a translation in a plane essentially parallel to the window,
and where the frame (4) is mounted so as to be able to move on rails (5) and (6) which extend longitudinally, said assembly being actuated by the handle mechanism (9) that is arranged such that a single movement is enough to lock or unlock the frame (4) of the movable window (3) and bring about sliding in the rails (5) and (6), and in which the movable window (3), in its closed position, is immobilized by means of the handle mechanism (9).

2. Device according to Claim 1, in which immobilizing/releasing is effected by means of the rotation of a rod (10) extending along the edge (7) of the frame (4), the rod (10) comprising, at its ends, means engaging with rails (5), (6) attached to the panel (2) during sliding of the movable window.

3. Device according to Claim 2, in which the mechanism of the handle (9) comprises a means (26) engaging with a ring (24) forming a cam, arranged on the rod (10), preventing the rotation of the latter, until a threshold in the actuation of the handle (9) is reached.

4. Device according to Claim 3, in which the handle (9) is able to move in translation in a direction essentially parallel to the plane of sliding of the movable window (3).

5. Device according to Claim 4, in which the mechanism of the handle (9) comprises a rack (18) which meshes with a pinion (19) secured to the rod (10).

6. Device according to Claim 5, in which the rack (18) is made to move only once the threshold allowing rotation of the rod (10) is exceeded.

7. Device according to one of Claims 3 to 6, in which the rotation of the ring (24) under the action of the handle is limited by one or more stops (20) secured to the frame (4).

8. Device according to Claim 7, in which the rotation of the rod (10) is limited such that it positions the ends (30) of the rod (10) in line with the straight portion of the sliding tracks (34) created in the rails (5, 6).

9. Device according to one of Claims 1 to 8, comprising return means which are secured to the rod and urge the latter to rotate in the opposite direction from that obtained by actuating the handle.

10. Device according to Claim 9, in which the return means consist of one or more coil springs which surround the rod (10) and are coaxial therewith.

11. Device according to Claim 9 or Claim 10, in which the reverse rotational movement, imposed by the return means when the handle is no longer actuated, presses the end (30) of the rod (10) against the walls of the sliding track (34) in the rails (5, 6), braking by friction the sliding movement when the window has been removed from its "flush" closed position.

12. Device according to one of Claims 1 to 11, in which, in addition to the end of the rod (10) sliding in the track (34), the means engaging with the rails (5, 6) during sliding comprise rollers (29) arranged eccentrically with respect to the end (30) of the rod (10), these rollers remaining in straight tracks (28) arranged in the rails (5, 6) during the movements of the window.

13. Device according to Claim 12, in which the sliding tracks (28) of the rollers (29) comprise one or more recesses (36) in the walls (32) of this track (28), these recesses receiving the roller (29) under the effect of the return rotation when the handle ceases to be actuated.

14. Sliding window (3) for a motor vehicle comprising a device according to one of Claims 1 to 13.
